# EUROPEAN PATENT SPECIFICATION

(11) **EP 4 121 694 B1**
(45) Date of publication and mention of the grant of the patent: **27.08.2025**
(21) Application number: 21713620.9
(22) Date of filing: 17.03.2021
(51) Int. Cl.: F23D 17/00, F23D 23/00, B60H 1/22, F24H 6/00

(54) **HEATING APPARATUS, RECREATIONAL VEHICLE WITH HEATING APPARATUS AND METHOD FOR HEATING FLUIDS IN A RECREATIONAL VEHICLE**
HEIZVORRICHTUNG, FREIZEITFAHRZEUG MIT HEIZVORRICHTUNG UND VERFAHREN ZUM ERWÄRMEN VON FLÜSSIGKEITEN IN EINEM FREIZEITFAHRZEUG
APPAREIL DE CHAUFFAGE, VÉHICULE DE LOISIR AVEC APPAREIL DE CHAUFFAGE ET PROCÉDÉ DE CHAUFFAGE DE FLUIDES DANS UN VÉHICULE DE LOISIR

(30) Priority: 17.03.2020 DE 102020203422
(43) Date of publication of application: 25.01.2023
(73) Proprietor: Dometic Sweden AB, 171 54 Solna (SE)
(72) Inventor: STRANG, Kenneth, Richmond, V6V 1P6 (CA); JONES, Russell, Richmond, V6V 1P6 (CA); PARKIN, Alan, Richmond, V6V 1P6 (CA); WAN, Hadylee, Richmond, V6V 1P6 (CA); THOMAS, Korbin, Richmond, V6V 1P6 (CA); DICKEY, Aaron, Richmond, V6V 1P6 (CA); GARON, Pierre, Richmond, V6V 1P6 (CA); ROHRICK, Nathaniel, Richmond, V6V 1P6 (CA)
(74) Representative: Grosse, Felix Christopher
(86) International application number: PCT/EP2021/056839
(87) International publication number: WO 2021/185918

(56) References cited:
- EP-A1- 3 150 916
- WO-A1-2019/025635
- DE-A1- 2 623 921
- GB-A- 2 326 934
- JP-A- S59 185 937
- US-A1- 2017 008 367

## Description

This invention relates to a heating apparatus, a recreational vehicle with such a heating apparatus and to a method for heating fluids in a recreational vehicle, in particular two distinct fluids in a recreational vehicle.

A heating apparatus for a recreational vehicle usually comprises a burner and a heat exchanging unit. While the burner is provided for burning a mixture of fuel gas or liquid and combustion air, the heat exchanging unit is provided for transferring heat from the exhaust gases from the combustion within the burner to one distinct fluid that has to be heated. The fluid to be heated is typically air from the interior of the recreational vehicle and/ or water for sanitary or cooking purposes.

Meanwhile, also several configurations of heating apparatus, in particular for recreational vehicles, are known which are configured to heat distinct fluids more or less independently of each other.

An exemplary heating apparatus is disclosed in EP 3 150 916 A1, which comprises two parallel heat exchangers with a burner each. The burners are provided with combustion air by a single fan and are configured to burn fuel gas. The exhaust gas created is received by the heat exchanging units in order to heat fluids.

Similar designed heating apparatuses are also shown for example in JP S59 185 937 A and GB 2 326 934 A.

However, the known configurations suffer from several drawbacks. In particular, known configurations often are expensive, require intensive maintenance and are in particular very bulky and heavy. Moreover, it is the permanent aim to increase the efficiency of such systems while reducing the consumption of energy at the same time.

Accordingly, there is much space for further developments of such heating apparatus.

The object of the present invention is, thus, to overcome at least some of the aforementioned drawbacks of prior art devices.

This object is achieved by the heating apparatus as well as by the method for heating fluids according to the appended claims. The present invention also covers a recreational vehicle comprising such a heating apparatus.

According to a first aspect of the present invention a heating apparatus, in particular for recreational vehicles like campers or caravans, comprises a heating unit and two separate heat exchanging units. The heat exchanging units are coupled to the heating unit in parallel with each other. The heating unit comprises one burner for each heat exchanging unit and one common single combustion air fan unit. The single combustion air fan unit is configured to supply the burners with combustion air. The burners are configured to burn fuel gas or liquid further supplied to each of the burners together with the combustion air received from the single combustion air fan unit to get hot exhaust gasses. The heat exchanging units are configured to receive the exhaust gasses from the burners and to transfer heat from the exhaust gasses to the fluids to be heated, provided within the heat exchanging units.

In other words, according to the present invention, a heating apparatus has two independent heating circuits. One heating circuit is provided for heating a first fluid and another one is provided for heating a second fluid. Thus, it is possible to heat both fluids independently of each other. However, both heating circuits are supplied with combustion air by only one common single combustion air fan unit. Providing only one common single combustion air fan unit allows to save space and energy and results in reduced maintenance efforts as well. In other words, instead of being supplied by two separate combustion air fan units only one single combustion air fan unit is provided and supplies combustion air to both heating circuits so that only one has combustion air fan unit to be maintained.

The single combustion air fan unit has only one single combustion air fan for generating the flow of combustion air. In particular the single combustion air fan comprises only one single fan wheel, preferably in the form of an impeller. Such a configuration is space saving. Moreover, such a configuration is reliable due to the small number of various elements. Furthermore, impellers allow extra small configurations.

The single combustion air fan unit further comprises two housing elements. The housing elements are coupled to each other to form a combustion air flow path from one combustion air inlet opening via one single combustion air fan chamber to two combustion air outlet openings. The combustion air inlet opening is provided in one of the two housing elements. The one single combustion air fan chamber is enclosed by the two housing elements and contains the single combustion air fan. The combustion air outlet openings are provided in the housing elements. In particular, both combustion air outlet openings are provided in the same housing element, and preferably in the same housing element than the combustion air inlet opening. Each of the combustion air outlet openings is coupled to one of the burners. Such a configuration is space saving and robust against external influences like dust or shocks as the single combustion air fan is enclosed by the housing elements.

Preferably, the first heat exchanging unit is configured to transfer heat from the exhaust gasses to a liquid, in particular water for sanitary or cooking purposes, to be heated. Furthermore or alternatively, the second heat exchanging unit can be configured to transfer heat from the exhaust gasses to a gas, in particular ventilation air from an indoor room of the recreational vehicle, to be heated. With such a configuration, it is possible to heat as first fluid a liquid and as second liquid a gas. Thus, it is possible to heat different fluids resulting in a highly flexible implementation.

Further preferably, the heating unit comprises a printed circuit board assembly. The printed circuit board assembly is coupled to the burners and configured to operate the burners independently of each other to heat the fluids provided in the heat exchanging units independently of each other. This configuration allows to heat both fluids independent of each other depicting a highly functional and flexible implementation.

Further preferably, the burners are coupled to the single combustion air fan unit in parallel with each other, such that a flow of combustion air generated by the single combustion air fan unit is split between the burners. By splitting the flow of combustion air from the single combustion air fan unit both burners are supplied with fresh combustion air. This allows to operate the burners more independently of each other and with efficiency.

In such a configuration, it is further preferred that the single combustion air fan unit further comprises a combustion air fan driving unit coupled to the single combustion air fan and configured to drive the combustion air fan. The combustion air fan driving unit is provided on an outer surface of one of the housing elements. Further, the combustion air fan driving unit is coupled to the combustion air fan via a driving rod lead through a driving rod through hole provided in the housing element on which the combustion air fan driving unit is attached. In particular, the driving rod through hole is provided in one of the housing elements having no combustion air inlet or outlet openings. Providing the combustion air fan driving unit not within the combustion air fan housing unit allows easy access thereto and, thus, a facilitated maintenance thereof.

In such configurations, it is further preferred that the single combustion air fan unit further comprises two combustion air valves. Each of the combustion air valves is configured to close a section of the combustion air flow path from the single combustion air fan chamber to one of the combustion air outlet openings. This configuration results in the possibility to control the amount or rate of combustion air supplied to the burners independently of each other such that the heating apparatus can be operated in a flexible and efficient way.

Preferably, at least one of the burners comprises two nozzles configured to supply fuel gas or liquid to a combustion area in which the fuel gas or liquid is to be burned with the combustion air. Each of the nozzles is coupled to its own fuel gas or liquid valve to control the fuel gas or liquid supply for each of the nozzles independently of each other. Providing two parallel nozzles with independently controllable valves for one burner allows to supply the combustion area with distinct amounts or rates of fuel gas or liquid and, thus, to control the combustion reaction at the corresponding combustion area in a flexible and efficient way.

In such a configuration, it is preferred that the fuel gas or liquid valves are provided as monostopable valves being switchable between an opened and a closed operation state. Such monostopable valves are inexpensive and reliable.

In such configurations, it is further preferred that the nozzles of one burner differ from each other, in particular one nozzle may differ from the other in cross section of its supply opening and, thus, in its through put rate. This configuration allows to increase the number of various supply rates which can be set by opening and closing the various fuel gas or liquid valves.

Preferably, the heating unit further comprises a secondary air supply arrangement. The secondary air supply arrangement is configured to provide a flow of secondary air to at least one, in particular to both of the burners.

Such a secondary air supply arrangement in particular is configured to be operated at distinct operation states with different supply rates for the secondary air. This implementation results in an increased flexibility for operating the heating apparatus in an optimized manner.

According to a further aspect of the present invention, a recreational vehicle, in particular a camper or caravan, comprises at least one of the above described heating apparatus. Thus, it is possible to take advantage of the above described technical effects in the recreational vehicle.

According to another aspect of the present invention, a method for heating two distinct fluids with one of the above described heating apparatus comprises the following steps:
- operating the single combustion air fan unit to generate a flow of combustion air from an external environment of the heating apparatus to each of the burners;
- supplying fuel gas or liquid to each of the burners; operating the burners to burn a mixture of the combustion air with the fuel gas or liquid;
- supplying a first fluid to be heated to the first heat exchanging unit and supplying a second fluid to be heated, different from the first fluid to be heated, to the second heat exchanging unit; guiding the exhaust gasses of the combustion within the first burner from the first burner to and through the first heat exchanging unit to transfer heat from the exhaust gasses to the first fluid; and
- guiding the exhaust gasses of the combustion within the second burner form the second burner to and through the second heat exchanging unit to transfer heat from the exhaust gasses to the second fluid.

With this method according to the present invention it is possible to heat two distinct fluids independently from each other in a highly efficient manner as only one common single combustion air fan unit is to be operated.

After being guided through the heat exchanging units the exhaust gasses are used to preheat the combustion air. Such an implementation is highly energy efficient as the remaining heat of the exhaust gasses which is not transferred to the fluids is used to preheat the combustion air and, thus, is at least in part transferred to the fluids in a second step of heat transfer.

Preferably, the combustion air fan unit is operated in such a manner that it provides the flow of combustion air to the burners simultaneously and in parallel with each other. Thus, the fluids can be heated flexible and/ or independently of each other.

Further preferably, the burners are operated simultaneously such that the fluids are heated simultaneously. In particular, the burners are not operated in a periodical manner, and in particular not in an alternating manner. This implementation allows to heat both fluids with the maximum heat outputs of the burners simultaneously.

These and other features of the invention will become more apparent from the following detailed description of a preferred, non-limiting embodiment of the present invention, with reference to the accompanying drawings, in which:
- FIG. 1: is a spatial view of a heating apparatus according to one exemplary embodiment of the present invention;
- FIG. 2: is a further spatial view of the heating apparatus of FIG. 1;
- FIG. 3: is a partially exploded illustration of the heating apparatus of FIGS. 1 and 2;
- FIG. 4A: is a spatial view of an exemplary the coupling member for the heating apparatus;
- FIG. 4B: is an enlarged spatial view of the coupling member of FIG. 4A;
- FIG. 5: is a spatial view of an exemplary burner for the heating apparatus;
- FIG. 6A: is an exploded illustration of an exemplary combustion air fan unit for the heating apparatus;
- FIG. 6B: is a spatial view of another exemplary combustion air fan unit for the heating apparatus;
- FIG. 7: is another partially exploded illustration of the heating apparatus of FIGS. 1 and 2;
- FIGS. 8A to 8C: are various spatial views of the heating apparatus with distinct elements omitted to show the inner structural configuration of the heating apparatus;
- FIG. 9: is a spatial view of the heating apparatus illustrated in the above referenced FIGS. with lines indicating various cross-sectional planes;
- FIG. 10A: is a cross-sectional view of the heating apparatus along line A-A of FIG. 9;
- FIG. 10B: is a cross-sectional view of the heating apparatus along line B-B of FIG. 9;
- FIG. 10C: is a cross-sectional view of the heating apparatus along line C-C of FIG. 9;
- FIG. 11: is a schematic illustration of the structural configuration of the heating apparatus illustrated in the above referenced figures.

With reference to the accompanying drawings, a heating apparatus 1 according to the present invention comprises a heating unit 10, a first heat exchanging unit 30 and a second heat exchanging unit 40. The first heat exchanging unit 30 and the second heat exchanging unit 40 are both coupled to the heating unit 10 in parallel with each other.

The heating unit 10 comprises a primary housing 12, a secondary housing 14 and a coupling member 16, coupled to each other and housing further components of the heating unit 10. The secondary housing 14 is coupled fixedly, for example via screw members, to the coupling member 16. Alternatively, the secondary housing 14 can be formed integrally with the coupling member 16 as one-piece unitary member. The primary housing 12 of the heating unit 1 is coupled to the secondary housing 14 and to the coupling member 12 in a releasable manner, for example via clamping members or via a form fitting. This results in a configuration in which the primary housing 14 can be disengaged from the secondary housing 14 and the coupling member 16 in an easy manner. This enables access to the interior components of the heating unit 10 for maintenance or the like. However, alternatively the primary housing 12 can be coupled to the secondary housing 14 and/or the coupling member 16 via a configuration requiring the use of appropriate tools.

The primary housing 12 is provided with an opening 12a. The opening 12a is covered with a removable lid (not illustrated). The lid allows access to the interior of the heating unit 10 in an easy but limited manner. This opening 12a is for example provided to connect electrical connections for power, control and/or 230Vac electrical power to a circuit panel of a printed circuit board assembly (described later) of the heating unit 10. In addition thereto or alternatively, other desired operations on the interior components of the heating unit 10 are possible via the opening 12a without the need of removing the primary housing 12 or parts thereof.

At least the primary housing 12, in particular also the secondary housing 14, is provided with some ventilation slots 12c and 14c. The ventilation slots 12c, 14c allow air from the exterior of the heating apparatus 1 to enter the interior of the heating unit 10. In the illustrated configuration, in the assembled state of the heating unit 10 the ventilation slots 14c provided in the secondary housing 14 are configured to extend corresponding ventilation slots 12c provided within the primary housing 12. In the present embodiment, on each of three different sides of the primary housing 12 a set of eight horizontal ventilation slots 12c is provided. However, also configurations with more or less than eight ventilation slots 12c per side, and/or other structural configurations for the ventilation slots 12c and 14c, like for example ventilation slots having circular or elliptical shapes or ventilation slots extending in vertical direction, are suitable within the scope of the present invention.

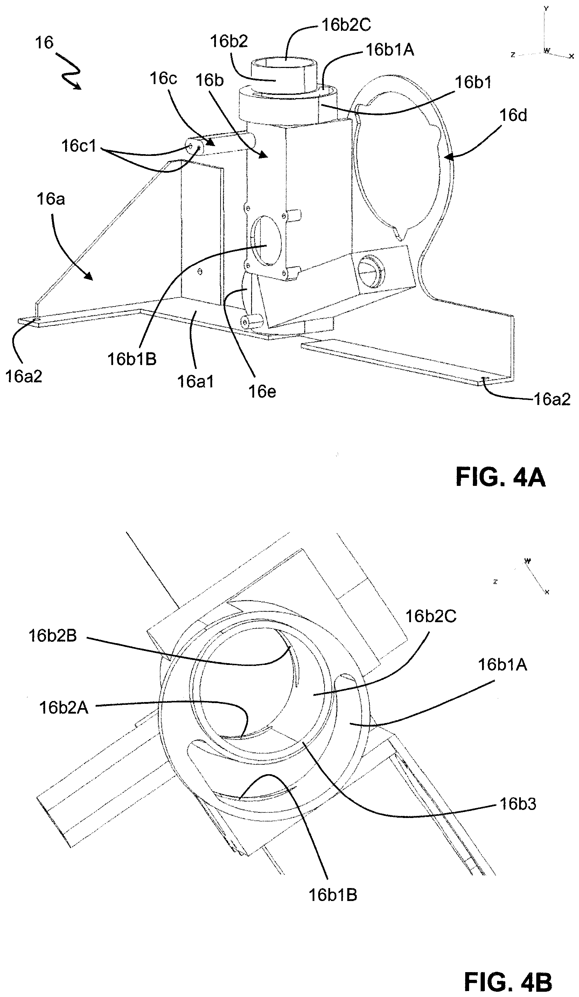

As illustrated in FIGS. 4A and 4B the coupling member 16 comprises basically a base portion 16a, a preheating portion 16b, a printed circuit board assembly coupling portion 16c, and two burner coupling portions 16d and 16e coupled to each other. Here, the coupling member 16 is a one-piece unitary member. The coupling member 16 can thus be formed in a single cast process. However, some or all of the various portions 16a to 16e of the coupling member 16 can be provided as independent parts coupled to each other in an appropriate manner, for example with screws or bolts.

The base portion 16a of the coupling member 16 comprises a bearing surface 16a1. The bearing surface 16a1 has a plurality of through holes 16a2. In the present configuration bearing surface 16a1 has two through holes 16a2. The number of through holes can vary depending on the specific need. The through holes 16a2 allow appropriate bolts or screws to pass therethrough such that the base portion 16a of the coupling member 16 can be fixed to a surface of the recreational vehicle like, for example, a wall, floor or ceiling area of the recreational vehicle or to any other suitable surface. The base portion 16a can be integrated into the secondary housing 14.

The preheating portion 16b comprises a combustion air flow duct 16b1 and an exhaust gasses flow duct 16b2. The exhaust gasses flow duct 16b2 is completely enveloped by the combustion air flow duct 16b1. The two air flow ducts 16b1 and 16b2 are at least partly separated from each other by only one heat transmitting separation wall 16b3. Thus, heat is transferred between air within the two air flow ducts 16b1 and 16b2. The combustion air flow duct 16b1 comprises an inlet opening 16b1A and an outlet opening 16b1B. The exhaust gasses flow duct 16b2 comprises two inlet openings 16b2A and 16b2B as well an outlet opening 16b2C coupled to each other, respectively.

The printed circuit board assembly coupling portion 16c is configured to attach a printed circuit board assembly (PCBA) 18 thereto in a releasable manner. In the illustrated configuration this can be done via appropriate screws engaging threaded bores 16c1 provided within the PCBA coupling portion 16c. Furthermore, the printed circuit board assembly coupling portion 16c comprises a port that allows the sensing of the intake air pressure. In other embodiments, the structural element labeled with reference sign 16c is not provided to attach the printed circuit board assembly 18 thereto. Instead, it is provided for the port for sensing the intake air pressure only.

Each of the two burner coupling portions 16d and 16e is provided as circular frame member 16d1 or 16e1 having an interior opening 16d2 or 16e2 and several engaging recesses 16d3 and 16e3. A single burner 20 and 22 can be inserted into each of the burner coupling portions 16b and 16a to be coupled to the corresponding heat exchanging unit 30 or 40. Each burner 20, 22 can be locked in this position via appropriate engaging members like screws or bolts.

The heating unit 10 is enclosed by the primary housing 12. In the inner of the heating unit 10 the secondary housing 14 and the coupling member 16, the above references PCBA 18, two burners 20 and 22, a fuel gas or liquid piping 24 coupled to the two burners 20 and 22 and having an inlet port configured to be coupled to a storage for fuel gas or liquid (not illustrated), a combustion air fan unit 26 and a ventilation air driving unit 28 are provided. Here, the term burners 20 and 22 refer to fuel manifolds as illustrated.

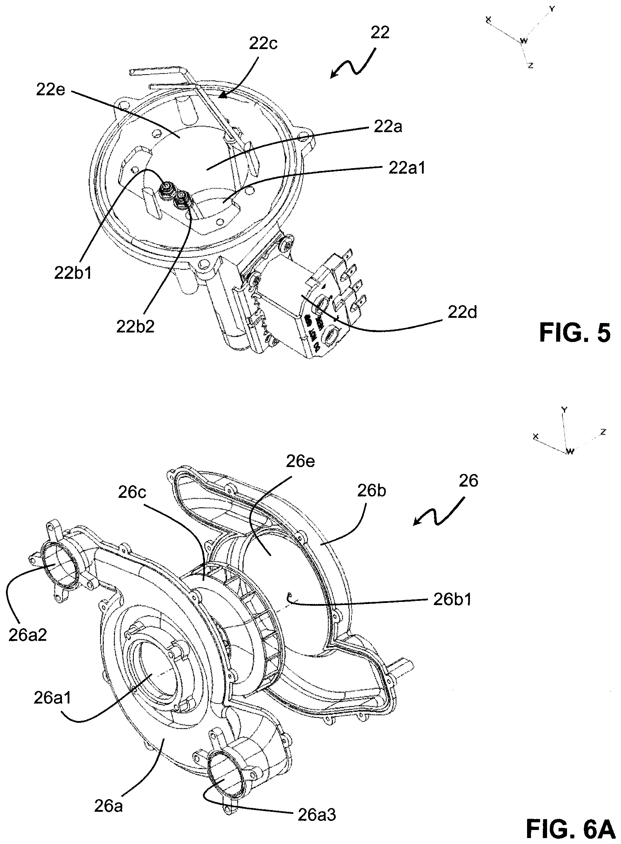

The two burners 20 and 22 are inserted into the burner coupling portions 16d and 16e of the coupling member 16. The two burners 20 and 22 protrude from the inner of the heating unit 10 with their flame generating side. FIG. 5 illustrates an example for the structural configuration of a dual nozzle fuel manifold of the burners 20 and 22, here in particular an exemplary embodiment of the second burner 22. According to this configuration the second burner 22 comprises a combustion air flow duct 22a, several (here in particular two) nozzles 22b1 and 22b2, an ignition arrangement 22c and a controlling arrangement 22d.

The combustion air flow duct 22a is configured to lead a flow of combustion air from a combustion air fan unit 26 coupled to an inlet opening 22a1 of the combustion air flow duct 22a (here the lower end thereof) to a combustion area 22e of the burner 22.

The two nozzles 22b1 and 22b2 are provided with passive flow disturbance devices (not illustrated). The two nozzles 22b1 and 22b2 receive gas or liquid via corresponding fuel gas or liquid piping 24 coupled thereto. The two nozzles 22b1 and 22b2 are thus configured to supply fuel gas or liquid to the combustion area 22e of the burner 22. The two nozzles 22b1 and 22b2 consist of a first nozzle 22b1 and a second nozzle 22b2. The second nozzle 22b2 is differing from the first nozzle 22b1 in a cross section of its supplying opening. Accordingly, the first nozzle 22b1 and the second nozzle 22b2 have different throughput rates.

The ignition arrangement 22c is configured to ignite the mixture of combustion air from the combustion air flow duct 22a with the fuel gas or liquid from the two nozzles 22b. In the illustrated embodiment, the ignition arrangement 22c is provided as electric arc or spark generating arrangement having two elongated electrodes 22c1. Here, the elongated electrodes 22c1 serve also as flame detector and feedback unit which will be referred to later.

The controlling arrangement 22d is configured to be coupled to the PCBA 18 of the heating unit. The controlling arrangement 22d is coupled to the ignition arrangement 22c and two fuel gas valves or liquid valves (not illustrated here but further referred to below). The PCBA 18 is configured to supply electrical power to the ignition arrangement 22c to operate the ignition arrangement 22c appropriately, for example, by generating an electric arc or spark to ignite therewith within the combustion area. Each of the two fuel gas valves or liquid valves is coupled to one of the two nozzles 22b1 and 22b2. By the fuel gas or liquid valves the fuel supply for each of the two nozzles 22b1 and 22b2 can be controlled independently of each other. Both fuel gas or liquid valves are monostable valves having an opened operation state and a closed state. Such monostable valves are well known in the art, which is why a detailed description thereof is omitted here for the sake of brevity.

With such a configuration, in principle, four states for the fuel supply at the combustion area 22e and, thus, four different heat outputs of the second burner 22 can be selected by the controlling arrangement:
In a first operation state, both valves, the fuel gas valve and the liquid, valve are closed such that no fuel gas or liquid is provided to the combustion area 22e. Accordingly, there is no combustion process in the combustion are 22e and the heat output is zero.

In a second operation state, one of the fuel gas valve and the liquid valve coupled to the first nozzle 22b1 is opened while the other one of the fuel gas valve and the liquid valve coupled to the second nozzle 22b2 is closed. Accordingly, fuel gas or liquid is provided to the combustion area 22e as defined by the throughput rate of the first nozzle 22b1. This results in a first heat output.

In a third operation state, one of the fuel gas valve and the liquid valve coupled to the first nozzle 22b1 is closed while the other one of the fuel gas valve and the liquid valve coupled to the second nozzle 22b2 is opened. Accordingly, fuel gas or liquid is provided to the combustion are 22e as defined by the throughput rate of the second nozzle 22b2. This results in a second heat output differing from the first heat output.

In a fourth operation state, both valves, the fuel gas valve and the liquid valve, are opened such that fuel gas or liquid is provided to the combustion area 22e with a third fuel supply rate defined by the combined throughput rate of the first nozzle 22b1 and of the second nozzle 22b2. This results in a third heat output substantially corresponding to the sum of the first heat output and of the second heat output.

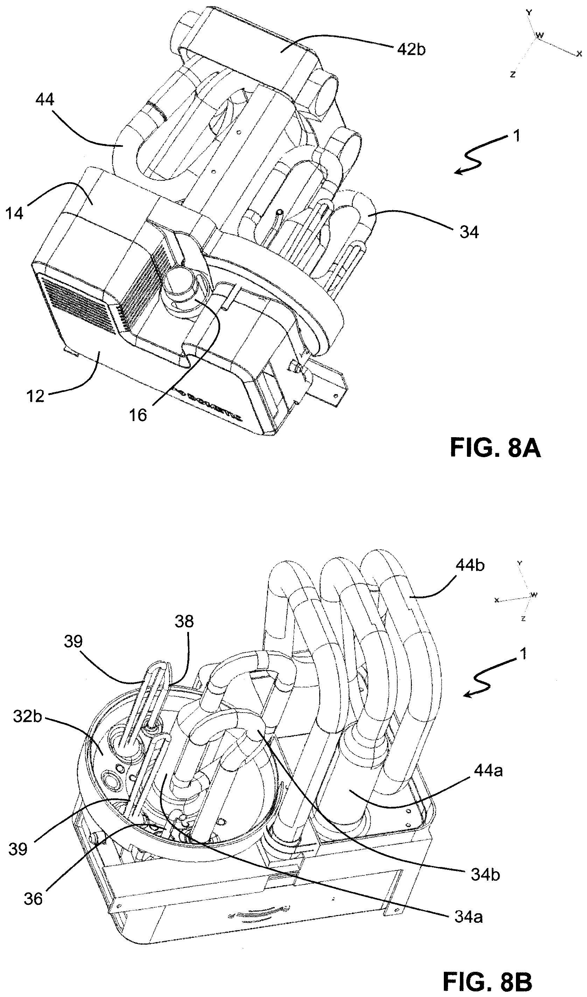

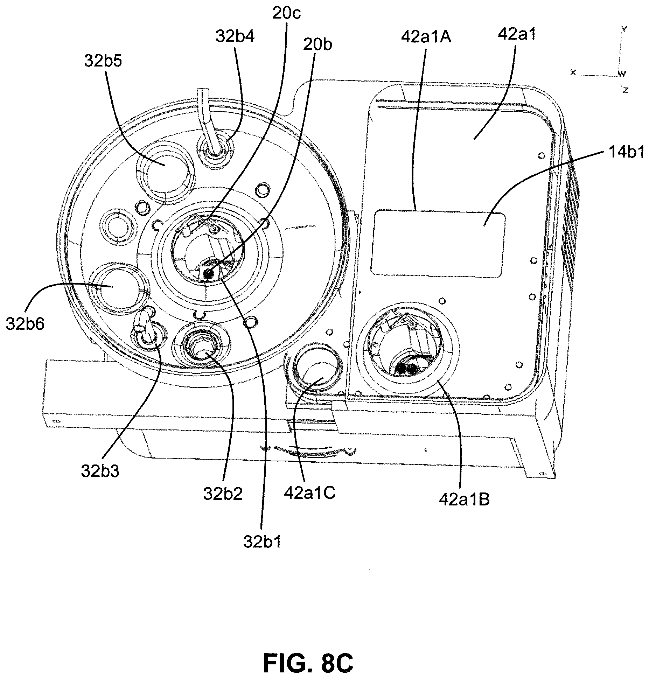

In the illustrated embodiment, the first burner 20 in principle has the same structure as the second burner 22. But in the present configuration the first burner 20 comprises one single nozzle 20b. Moreover, only one fuel gas valve or liquid valve is coupled thereto instead of two, as is illustrated in FIG. 8C. In the illustrated embodiment, it is not necessary to provide both burners 20 and 22 with the possibility to switch between four distinct operation states. Thus, providing the first burner 20 with only one nozzle 20b can save costs. Nevertheless, the first burner 20 can have the same configuration as the second burner 22, if desired.

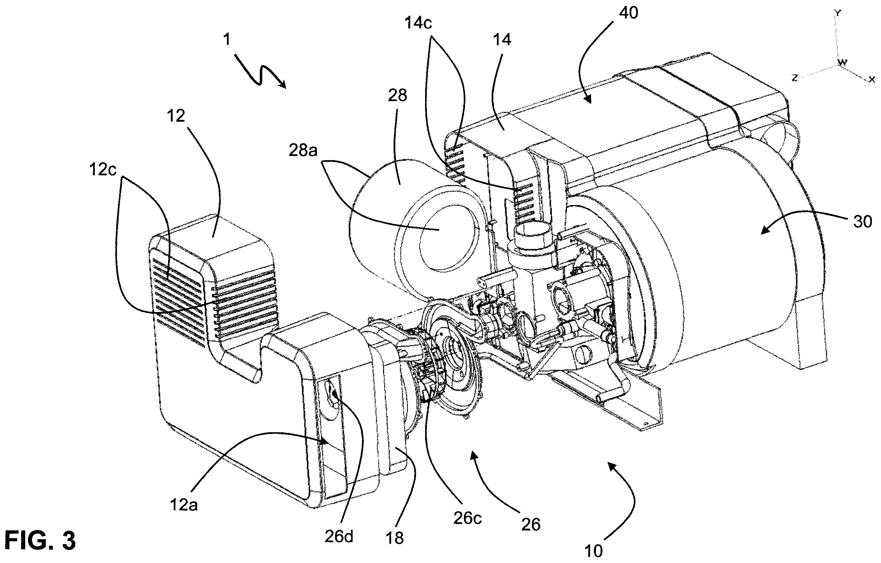

As illustrated in FIG. 6A, the combustion air fan unit 26 comprises two housing elements 26a and 26b, one single combustion air fan 26c, and a combustion air fan driving unit 26d (seen in FIG. 3) for the combustion air fan 26c.

The first housing element 26a comprises a combustion air inlet opening 26a1 and two combustion air outlet openings 26a2 and 26a3. The combustion air inlet opening 26a1 is coupled via a common O-ring (not illustrated) to the outlet opening 16b1A of the combustion air flow duct 16b1. The first outlet opening 26a2 of the first housing element 26a is coupled via a common O-ring (not illustrated) to the inlet end opening 20a1 of the combustion air flow duct 20a of the first burner 20. The second outlet opening 26a3 of the housing element 26a is coupled via a common O-ring (not illustrated) to the inlet opening 22a1 of the combustion air flow duct 22a of the second burner 22.

The second housing element 26b is coupled to the first housing element 26a with several coupling members, like for example bolts or other suitable coupling means (not illustrated). The first housing element 26a and the second housing element 26b are configured to form a combustion air flow path. The combustion air flow path leads form the combustion air inlet opening 26a1 to a combustion air fan chamber 26e. Further, the combustion air flow path leads from the combustion air fan chamber 26e via two separate flow path sections to each of the two combustion air outlet openings 26a2 and 26a3. The two sections of the combustion air flow path leading from the combustion air fan camber 26e to the combustion air outlet openings 26a2 and 26a3 can be provided with combustion air valves. The corresponding section of the combustion air flow path can be closed by the combustion air valves. Thus, it is possible to control a supply of combustion air to the two burners 20 and 22, for example, to enable an emergency shut down of the corresponding burner 20 or 22 and/ or to increase the amount of combustion air flow provided to the other burner 22 or 20 coupled to the section of the combustion air flow path which is still open.

In the present embodiment, the one single combustion air fan 26c is provided with one single fan wheel. In particular, the single fan wheel is implemented as an impeller. Such a configuration allows to save space. The combustion air fan 26c is positioned within the combustion air fan chamber 26e which is formed by the two housing elements 26a and 26b. The combustion air fan 26c is positioned in a plane perpendicular with respect to the central axis of the combustion air inlet opening 26a1. The combustion air fan 26c is configured to generate a flow of combustion air from the combustion air inlet opening 26a1 towards both of the combustion air outlet openings 26a2 and 26a3 and, thus, in the assembled state of the heating unit 10, to the two burners 20 and 22. As such fans are commonly known, a detailed description thereof is omitted for the sake of brevity.

The combustion air fan driving unit 26d is provided on an outer surface of the second housing element 26b. A driving rod (not illustrated) extends through a driving rod through hole 26b1 provided within the second housing element 26b. The combustion air fan driving unit 26d is coupled via the driving rod (not illustrated) to the combustion air fan 26c. The combustion air fan driving unit 26b is configured to drive the combustion air fan 26c for generating the above described flow of combustion air.

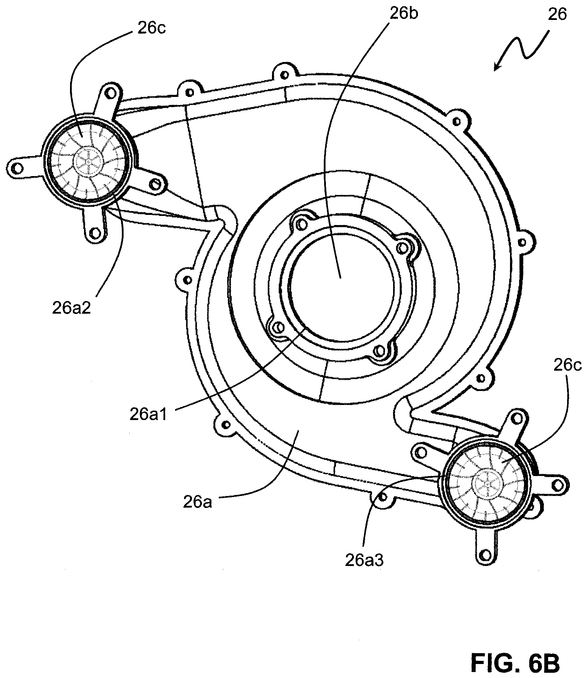

In FIG. 6B, another example for a combustion air fan unit 26 is illustrated. This combustion air fan unit 26 has basically the same structural configuration as the one illustrated in FIG. 6A, but comprises two separate combustion air fans 26c, each coupled to only one of the two combustion air outlet openings 26a2 and 26a3 (seen along the combustion air flow path). In other words, each distinct combustion air flow path for one of the burners 20 or 22 has its own combustion air fan 26c. Thus, it is possible to control the supply of combustion air to the two burners 20 and 22 independently of each other.

The ventilation air driving unit 28 is a ventilation unit well-known from the state of the art. The ventilation air driving unit 28 is configured to generate, in particular with a ventilation air fan provided therein, a flow of ventilation air from an inlet opening 28a of the ventilation air driving unit 28 towards an outlet opening 28b of the ventilation air driving unit 28. As such ventilation air driving units are well-known from the state of the art the detailed description thereof is omitted for the sake of brevity.

The ventilation air driving unit 28 is coupled, for example with bolts or screws (not illustrated) or by other suitable means, to the secondary housing 14. However, the ventilation air driving unit 28 can also be coupled to one of the elements of the heating apparatus 1, for example it can be coupled to the coupling member 16. Thus, the inlet opening 28a of the ventilation air driving unit 28 is positioned in the vicinity of the ventilation slots 12c and 14c of the housings 12 and 14. A ventilation air outlet section 14b1 is provided within the second heat exchanging unit opening 14b of the secondary housing 14. The outlet opening 28b of the ventilation air driving unit 28 is positioned on the ventilation air outlet section 14b1. Thus, the ventilation air driving unit 28 is configured to generate a ventilation air flow from the environment of the heating apparatus 1 through the ventilation slots 12c and 14c to the ventilation air outlet section 14b1.

As indicated above, the PCBA 18 is attached with the PCBA coupling portion 16c to the coupling member 16. The PCBA comprises a control signal receiving unit, a processing unit coupled to the signal receiving unit and several control signal wires coupling the processing unit with the controlling arrangements 20d and 22d of the two burners 20 and 22, the combustion air fan driving unit 26d, a controlling arrangement of the ventilation air driving unit 28 and a controlling arrangement for a bypass gas valve which can be provided.

The control signal receiving unit is configured to receive control signals via wired or wireless communication from a control signal input unit coupled to the control signal receiving unit. The control signal receiving unit is further configured to forward control signals to the processing units. For example, the control signal input unit can be a specific remote-control device or a common smart phone with an appropriate app sending control signals to the control signal receiving unit. This can be achieved by blue tooth or by other suitable wireless communication. Alternatively, the control signal input unit can be provided as a control panel coupled to the control signal receiving unit via cable. It is to be noted that control signals do not have to contain only direct control instructions. Control signals can also comprise, for example, various sensor signals. Sensor signals may, for example, comprise temperature sensors provided in the heating apparatus or in the recreational vehicle, etc. Moreover, the control input signal unit can be provided as one single device. It can, however, also comprise or consist of several independent devices like serval sensors and/ or input devices transmitting control signals to the control signal receiving unit.

The processing unit is configured to receive and to process the control signals received from the control signal receiving unit and to generate appropriate instruction signals for the various components coupled to the processing unit. In particular, the processing unit comprises a memory. The memory can be one of a volatile or non-volatile memory. The memory can contain programs or the like allowing the processing unit to generate appropriate instruction signals from the received control signals. The generated instruction signals do not necessarily have to contain just digital signals, which then have to be processed by the respective components receiving such signals. The generated instruction signals can also include analogue signals for directly operating the respective components. For this purpose, the PCBA further can contain a separate electrical power supply, like for example a battery. Alternatively or in addition thereto, the PCBA can be configured to be coupled to an external energy source like the power grid of the recreational vehicle etc.

In the illustrated embodiment, the PCBA 18 is configured to control and/or operate the controlling arrangements 20d and 22d of the two burners 20 and 22, the combustion air fan driving unit 26d, the ventilation air driving unit 28 and a bypass gas valve which can be provided. Further components controlled and/ or operated by the PCBA 18 will be discussed later. Within the scope of the present invention also other configurations for the PCBA 18 are possible. In particular, the PCBA 18 can be configured to use information about various temperatures, for example of an air temperature within the recreational vehicle or of the environment of the recreational vehicle, of a liquid temperature, for example of a fuel liquid of the heating apparatus 1 or a liquid to be heated with the heating apparatus 1, etc., various pressure values and/ or a flame ionization of the burners 20 and 22 to control the various components of the heating apparatus 1 in an appropriate manner.

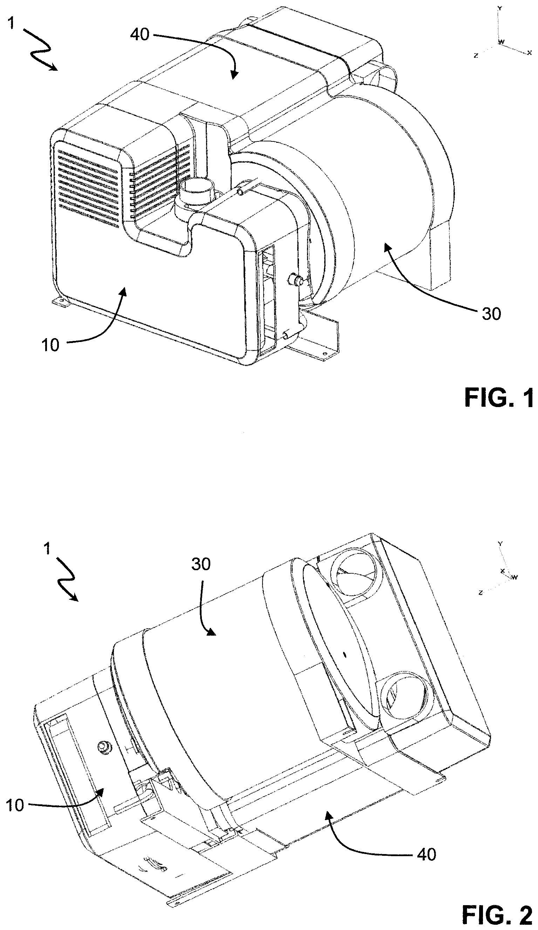

As indicated above, the heating apparatus 1 further comprises a first heat exchanging unit 30 and a second heat exchanging unit 40 coupled to the heating unit 10. The first heat exchanging unit 30 and the second heat exchanging unit 40 will be described in the following with reference to FIGS. 1 to 3.

The first heat exchanging unit 30 is configured to allow heat exchange between exhaust gases from the first burner 20 and a liquid to be heated. The first heat exchange unit 30 comprises a liquid tank 32, an exhaust gasses piping 34, a cold liquid piping 36 and a hot liquid piping 38. Both of the cold liquid piping 36 and the hot liquid piping 38 are provided with a coupling section to be coupled to an external cold liquid storage (not illustrated) or an external hot liquid storage (not illustrated), respectively. In the present configuration the liquid to be heated is water for sanitary or cooking purposes. However also other liquids could be used and heated with the first heat exchanging unit 30 according to the present invention. Furthermore, also all other sensors / switches, and electrical fuses/breakers work with the electrical heating devices as well.

The liquid tank 32 comprises a tubular main body 32a. The tubular main body 32a is enclosed on a bottom side thereof by a bottom plate 32a1 and opened on a top side of the main body 32a. The top side of the main body 32a is sealed with a lid member 32b. The lid member 32b has a central exhaust gasses inlet opening 32b1, an exhaust gasses outlet opening 32b2, a cold liquid inlet opening 32b3, a hot liquid outlet opening 32b4, two further equipment insertion openings 32b5 and 32b6 and a specific mounting structure configured to mount the lid member 32b and thus the liquid tank 32 to the heating unit 10. Alternatively, the further equipment insertion openings 32b5 and/or 32b6 can be moved to the bottom plate 32a1.

The exhaust gasses piping 34 is provided to one end thereof with a combustion chamber section 34a. The combustion chamber section 34a is coupled to the lid member 32b of the liquid tank 32 in such a manner that in the assembled state of the heating unit 1, the combustion air flow duct 20a of the first burner 20 is coupled to the combustion chamber section 34a of the exhaust gasses piping 34 in a sealed manner. Therefore, a common O-ring is provided between the first burner 20 and the exhaust gasses piping 34. Moreover, in the assembled state of the heating unit 1, the combustion area 20e of the first burner 20 is located within the combustion chamber section 34a of the exhaust gasses piping 34 such that the combustion reaction of the first burner 20 is taking place in the combustion chamber section 34a of the exhaust gasses piping 34.

The exhaust gasses piping 34 further has a tubular exhaust gasses leading section 34b. The tubular exhaust gasses leading section 34b is coupled at one of its ends to the combustion chamber section 34a in a sealed manner. At its other end the tubular exhaust gasses leading section 34b is coupled to the exhaust gasses outlet opening 32b2 of the lid member 32b. In particular, the exhaust gasses piping 34 is a one-piece unitary member having the combustion chamber section 324a and the exhaust gasses leading section 34b. However, within the scope of the present invention also other configurations are possible. As is illustrated in the figures, the exhaust gasses leading section 34b is provided in several loops within the main body 32a of the liquid tank 32. This is to increase the contact surface between the exhaust gasses piping 34 and a liquid provided within the liquid tank 32. By doing so a heat transfer from the exhaust gasses within the exhaust gasses piping 34 to the liquid within the liquid tank 32 is increased. For the same purpose, the tubular exhaust gasses leading section 34b may be provided with surface extensions (not shown), for example in the form of a radially extending fin or, preferably, in form of a plurality of fins, to further increase the contact surface between the exhaust gasses piping 34 and the liquid provided within the liquid tank 32. The tubular exhaust gasses leading section 34b and the surface extensions may be a one-piece member, for example the surface extensions may be extruded directly with the tubular exhaust gasses leading section 34b as one part. Alternatively. The surface extensions, preferably in form of fins, can be separate members being coupled to the tubular exhaust gasses leading section 34b by suitable means, like for example bolts, or methods, like for example welding. Of course, other suitable means to increase the contact surface between the exhaust gasses piping 34 and the liquid provided within the liquid tank 32 can be realized as well. The exhaust gasses outlet opening 32b2 of the lid member 32 is configured such that in the assembled state of the heating apparats 1, it is positioned on the first inlet opening 16b2A of the exhaust gasses flow duct 16b2. Thus, the exhaust gases can flow from the exhaust gasses piping 34 into the exhaust gasses flow duct 16b2 of the coupling member 16. The contact between the exhaust gasses piping 34 and the exhaust gasses flow duct 16b2 is sealed with a heat resilient O-ring, for example in form of a silicon O-ring. The O-ring is highly heat resistant to seal this connection reliably.

The cold liquid piping 36 goes through the could water inlet opening 32b3 of the lid member 32b into the liquid tank 32. Thus, the liquid to be heated can be supplied to the inner of the liquid tank 32. The hot liquid piping 38 goes through the hot water outlet opening 32b4 of the lid member 32b out of the liquid tank 32. Thus, the hot liquid can be discharged from the inner of the liquid tank 32. In the assembled state and the finally set configuration of the heating apparatus 1, the hot liquid outlet opening 32b4 and the hot liquid piping 36 have to be positioned at an upper position as compared to the cold water inlet opening 32b3 and the cold water piping 36 to achieve an expedient overall configuration.

In the illustrated embodiment, two electrically driven heating members 39 are inserted through the two equipment insertion openings 32b and 32b6 into the liquid tank 32. These, heating members 39 are coupled to the PCBA 18 to be controlled and/or operated thereby. They are provided to provide a further possibility to heat up the liquid within the liquid tank 32 either instead of or together with exhaust gases form the first burner 20. Thus, an increased heating rate is achieved. Moreover, if desired, it is possible to heat the liquid within the liquid tank 32 by electrical power only. Other equipment components like temperature sensors or the like can be inserted through one of the equipment insertions openings 32b5 and 32b6 and/or at least one of the equipment insertion openings 32b5 and 32b6 which can be closed by a removable lid member or may be sealed permanently.

The second heat exchanging unit 40 is configured to enable heat exchange between exhaust gases from the second burner 22 and ventilation air. Therefore, the second heat exchanging unit 40 comprises a ventilation air enclosure 42 and an exhaust gasses piping 44.

The ventilation air enclosure 42 comprises a tubular body section 42a and a lid section 42b. The tubular body portion 42a is sealed at one side thereof with an end plate 42a1. The end plate 42a1 is provided with a ventilation air inlet opening 42a1A and an exhaust gasses inlet opening 42a1B. The end plate 42a1 is configured such that it can be coupled to the secondary housing 14 and/ or the coupling member 16 in such a manner that, in the assembled state of the heating apparatus 1 in which the second heat exchanging unit 40 is coupled to the heating unit 10, the ventilation air inlet opening 42a1A of the ventilation air enclosure 42 is positioned on the ventilation air outlet opening 14b1 of the secondary housing 14. Thus, the combustion area 22e of the second burner 22 protrudes through the exhaust gasses inlet opening 42a1B into the ventilation air enclosure 42. Furthermore, the end plate 42a1 further comprises an exhaust gasses pipe outlet opening 42a1C. The exhaust gasses pipe outlet opening 42a1C is configured to be coupled via a silicone O-ring (not illustrated) to the second inlet opening 16b2B of the exhaust gasses flow duct 16b2 of the coupling member 16. The O-ring is highly heat resistant.

The lid section 42b is coupled at the other side of the body portion 42a to confine the inner space of the ventilation air enclosure 42. In the present configuration the lid section 42b is provided as separate element. The lid section 42c comprises four ventilation air outlet openings 42b1 to 42b4 arranged in pairs on two opposing side surfaces of the lid section 42b. Of course, also other configurations for the ventilation air outlet openings 42b1 to 42b4 can be realized, like configurations with less or even more ventilation outlet openings and/ or configurations having further elements like pipes or safety meshes.

The exhaust gasses piping 44 is provided to one end thereof with a combustion chamber section 44a. The combustion chamber section 44a is coupled to end plate 42a1 of the ventilation air enclosure 42 in such a manner that in the assembled state of the heating apparatus 1, the combustion air flow duct 22a of the second burner 22 is coupled to the combustion chamber section 44a of the exhaust gasses piping 44 in a sealed manner. Therefore, a common O-ring is provided between the second burner 22 and the exhaust gasses piping 44. Moreover, in the assembled state of the heating apparatus 1, the combustion area 22e of the second burner 20 is located within the combustion chamber section 44a of the exhaust gasses piping 44. Thus, the combustion reaction of the second burner 22 is taking place in the combustion chamber section 44a of the exhaust gasses piping 44.

The exhaust gasses piping 44 further has a tubular exhaust gasses leading section 44b. One end of the tubular exhaust gasses leading section 44b is coupled to the combustion chamber section 44a in a sealed manner. The other end of the tubular exhaust gasses leading section 44b is coupled to the exhaust gasses outlet opening 42a1C of the ventilation air enclosure 42. In particular, the exhaust gasses piping 44 is a one-piece unitary member having the combustion chamber section 44a and the exhaust gasses leading section 44b. However, also other configurations are possible. As may be taken from the FIGS. 8A to 8C, the exhaust gasses leading section 44b is provided in several loops within the body portion 42a of the ventilation air enclosure 42. By providing the several loops the contact area between the exhaust gasses piping 44 and a ventilation air provided within the ventilation air enclosure 42 is increased. This enables an increase of the heat transfer from the exhaust gasses within the exhaust gasses piping 44 to the ventilation air. For the same purpose, the tubular exhaust gasses leading section 44b may be provided with surface extensions (not shown), for example in the form of a radially extending fin or, preferably, in form of a plurality of fins, to further increase the contact surface between the exhaust gasses piping 44 and the ventilation air provided within the ventilation air enclosure 42. The tubular exhaust gasses leading section 44b and the surface extensions may be a one-piece member, for example the surface extensions may be extruded directly with the tubular exhaust gasses leading section 44b as one part. Alternatively. The surface extensions, preferably in form of fins, can be separate members being coupled to the tubular exhaust gasses leading section 44b by suitable means, like for example bolts, or methods, like for example welding. Of course, other suitable means to increase the contact surface between the exhaust gasses piping 44 and ventilation air provided within the ventilation air enclosure 42 can be realized as well. The exhaust gasses outlet opening 42a1C of the main body 42a is configured such that, in the assembled state of the heating apparatus 1, it is positioned on the second inlet opening 16b2B of the exhaust gasses flow duct 16b2. Thus, exhaust gases can flow from the exhaust gasses piping 44 into the exhaust gasses flow duct 16b2 of the coupling member 16. The contact between the exhaust gasses piping 44 and the exhaust gasses flow duct 16b2 is sealed with a heat resistant silicon O-ring. Thus, this connection is sealed reliably.

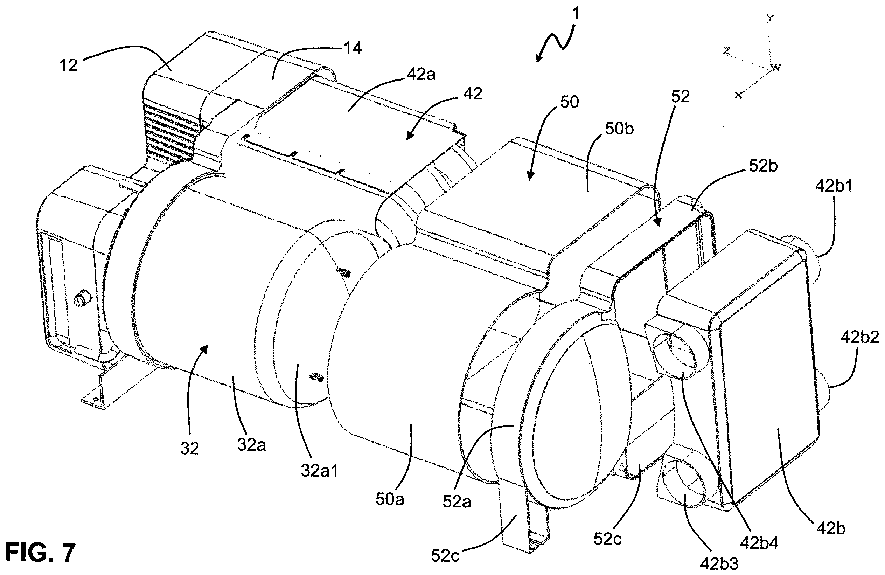

As for example can be seen in FIG. 7, the heating apparatus 1 further comprises a heat exchanging units housing shell 50 and a supplementary mounting member 52.

The heat exchanging units housing shell 50 is a tubular member configured to be pushed onto the two heat exchanging units 30 and 40 and to be fixed to the heating unit 10. The heat exchanging units housing shell 50 comprises a first heat exchanging unit section 50a and a second heat exchanging unit section 50b corresponding a respective one of the two heat exchanging units 30 and 40 in cross sectional shape as seen along their longitudinal axes. With the heat exchanging housing shell, the overall configuration of the heating apparatus 1 gains more structural stability and protection against external influences.

The supplementary mounting member 52 serves as lid member for the heat exchanging units housing shell 50. The supplementary mounting member 52 is coupled to the heat exchanging units housing shell 50 on the side opposing the side to which the heating unit 10 is coupled. The supplementary mounting member 52 is coupled to the heat exchanging units housing shell 50 in an appropriate manner like, for example, via form-fitting or separate coupling means. The supplementary mounting member 52 comprises a first heat exchanging unit section 52a, a second heat exchanging unit section 52b and at least one mounting section 52c coupled to each other.

The first heat exchanging unit section 52a of the supplementary mounting member 52 is configured to seal the first heat exchanging unit section 50a of the heat exchanging units housing shell 50.

The second heat exchanging unit section 52b of the supplementary mounting member 52 consist of a frame defining a central opening. Through the central opening the lid section 42b of the second heat exchanging unit 40 can be coupled to the body portion 42a of the second heat exchanging unit 40 in the longitudinal direction thereof.

In particular, the heating unit 10, the first heat exchanging unit 30 and the second heat exchanging unit 40 are provided as independent self contained arrangements coupled to each other in a releasable manner to form the heating apparatus 1. The heat exchanging units housing shell 50 is configured to enclose the two heat exchanging units 30 and 40 at least partly, such that the two heat exchanging units 30 and 40 cannot be separated from each other without removing the heat exchanging units housing shell 50. The heat exchanging units housing shell 50 is configured to be coupled to the heating unit 10 in a releasable manner. The heat exchanging units housing shell 50 is configured to couple the heating unit 10 and the two heat exchanging units 30 and 40 to each other in such a manner that for removal of the heat exchanging units housing shell 50 and, thus, for disassembling of the heating apparatus 1, the heat exchanging units housing shell 50 has to be decoupled form the heating unit 10 first.

As, for example, is illustrated in FIG. 7, the supplementary mounting member 52 comprises two mounting sections 52c. A mounting section 52c is coupled to the first heat exchanging unit section 52a and the other mounting section 52c is coupled to the second heat exchanging unit section 52b of the supplementary mounting member 52. Each of the mounting sections 52c is provided with a bearing surface 52c1 having at least one through hole 52c2. The at least one through hole 52c2 allows appropriate bolts or screws to pass there through. Thus, the supplementary mounting member 52 and thus the overall heating apparatus 1 can be fixed to a desired or suitable surface of the recreational vehicle like, for example, a wall, floor or ceiling area of the recreational vehicle.

It is to be noted that the above described configuration is a preferred but merely exemplary embodiment of a heating apparatus according to the present invention. However, the present invention and in particular the final scope of protection is defined by the appended set of claims. In particular, many of the above described structural features of the embodiment of the invention can be replaced by others or adapted if desired or necessary. Such modifications lie in the abilities and freedom of a skilled artisan without leaving the overall disclosure of the present invention.

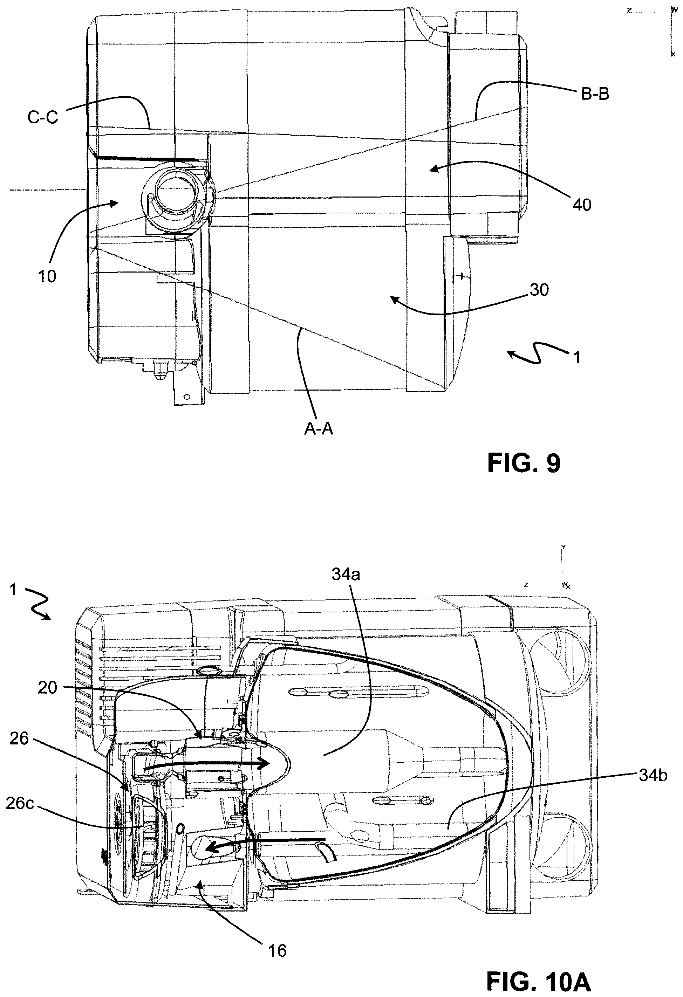

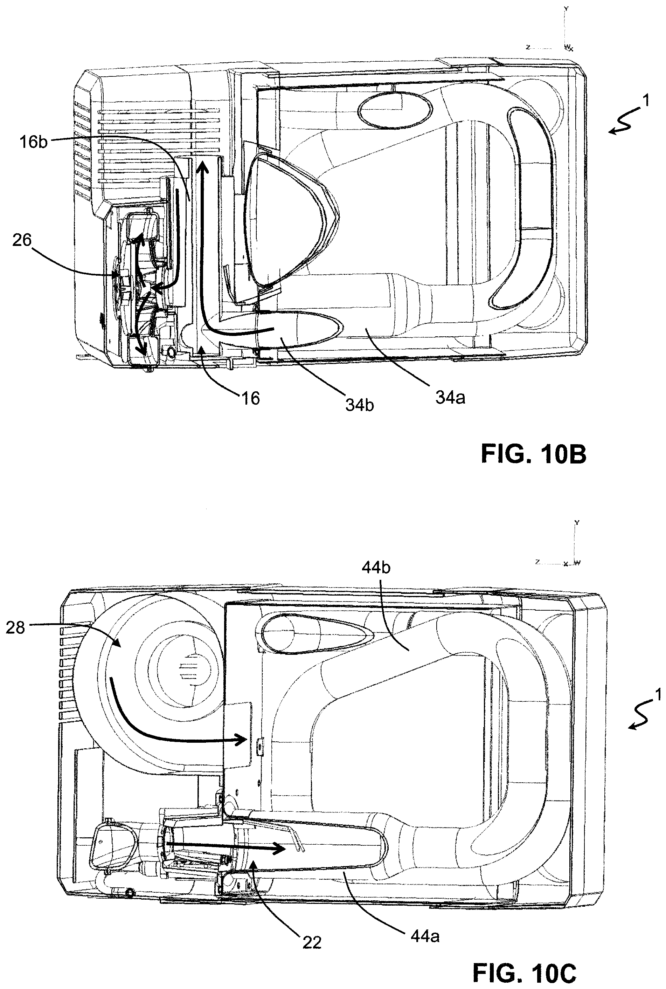

FIGS. 10A to 10C, illustrate several cross sections of the above described heating apparatus 1 to facilitate the understanding of the specific configuration of this exemplary embodiment (in particular with regard to the various flow paths), wherein in FIG. 9 the various cross-sectional planes are depicted.

Although not illustrated herein explicitly, a second aspect of the present invention refers to a recreational vehicle provided with a heating apparatus according to the present invention, like for example with the above described heating apparatus 1. Such recreational vehicles are well known in the art and it lies within the abilities of a skilled artisan to provide any heating apparatus within such a recreational vehicle. Accordingly, for the sake of brevity, a detailed description thereof is omitted.

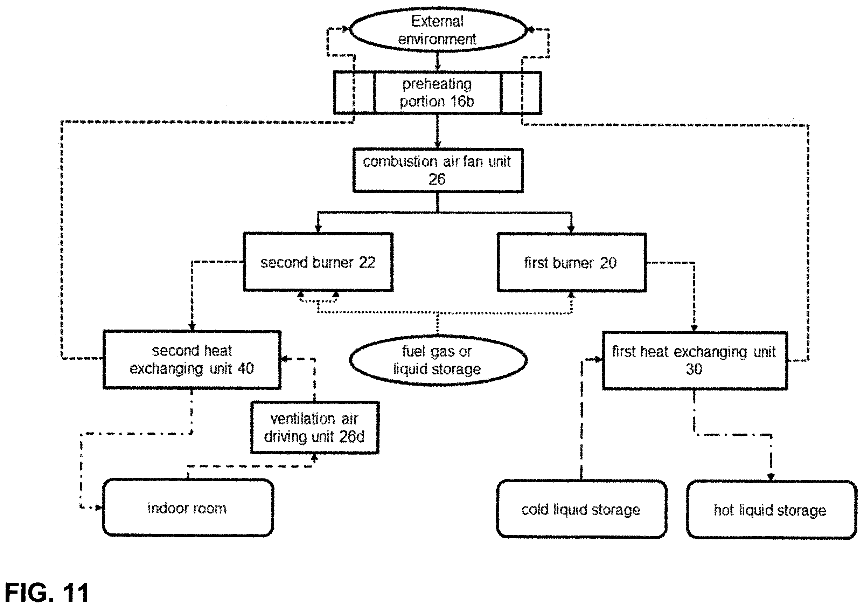

In the following, referring to FIG. 11, a method for heating fluids of the above described heating apparatus 1 is described as preferred but merely exemplary embodiment for the present invention according to the third aspect thereof.

Within the method according to the present invention the combustion air fan unit 26 is operated to suck combustion air from an external environment of the heating apparatus 1. The combustion air is sucked or forced through the combustion air flow duct 16b1 of the preheating portion 16b of the coupling member 16. The sucked combustion air is forced towards each of the two burners 20 and 22 generating an overpressure within the respective combustion areas 20e and 22e. Accordingly, no second combustion air fan unit has to be provided. This greatly reduces costs and the susceptibility to errors of the overall heating apparatus 1.

Each of the two burners 20 and 22 is further supplied with fuel gas or liquid from a fuel gas or liquid storage coupled thereto. Due to the fact that the second burner 22 is provided with two nozzles 22b1 and 22b2 to supply the fuel gas or liquid to the combustion area 22e, the rate with which fuel gas or liquid is supplied to the combustion area 22e can be switched between four various operation states by operating the respective valves. Accordingly, it is not necessary to provide an expensive and error-prone burner with a complex structure to achieve various operation sates. The combustion air and the fuel gas or liquid are mixed with each other within the combustion areas 20e or 22e and the obtained mixtures are ignited by the respective ignition arrangements 20c or 22c to burn within the respective combustion areas 20e or 22e.

Hot exhaust gasses from the first burner 20 are guided through the exhaust gasses piping 34 of the first heat exchanging unit 30 and transfer some of their heat to a corresponding liquid provided within the liquid tank 32 of the first heat exchanging unit 30. Permanently, fresh cold liquid from a cold liquid storage is supplied to the liquid tank through the cold liquid opening 32b3, while hot or at least heated liquid is discharged through the hot liquid opening 32b4 to a hot liquid storage. Thus, cold liquid is supplied to the heating apparatus 1 and hot/heated liquid is discharged by the heating apparatus 1

Hot exhaust gasses from the second burner 22 are guided through the exhaust gasses piping 44 of the second heat exchanging unit 40 and transfer some of their heat to ventilation air. The ventilation air is forced by the ventilation air driving unit 26b to move from an indoor room of the recreational vehicle, respectively a space in which the air is to be heated, through the body portion 42a of the second heat exchanging unit 40 back to the indoor room. Thus, cold ventilation air from the indoor room or interior of the recreational vehicle is sucked into the heating apparatus 1 and heated ventilation air is discharged into the indoor room or interior form the heating apparatus 1.

The exhaust gasses leaving both of the heat exchanging units 30 and 40 and which still have high temperature are guided into the exhaust gasses flow duct 16b2 of the preheating portion 16b and, thus, preheat the combustion air suck through the combustion air flow duct 16b1. This preheating results in a very efficient heating operation. Afterwards, the exhaust gasses are discharged into the external environment.

Although, in the above described process, both ventilation air and liquid are heated simultaneously the heating apparatus 1 also can be used for heating only one of the two liquids. As a skilled artisan will be able to consider various possibilities to operate the above described heating apparatus 1 resulting from its specific structural configuration, no detailed listing of all possible modes of operation is given here for the sake of brevity.

Now, a preferred but only exemplary method for starting the above described heating apparatus 1 according to the present invention is described in detail.

When it is desired to start the heating apparatus 1, firstly the fans of the combustion air fan unit 26 and of the ventilation air driving unit 28 are switched on with a predetermined rotation speed. Then, the respective ignition arrangements 20c and/ or 22c are/ is activated to provide an electric ignition, in particular an electric arc or at least sparks and the gas valves for the nozzles 20b, 22b1 and 22b2 desired to be operated are opened such that the mixture of combustion air and fuel gas or liquid is ignited at the respective combustion areas 20e and/ or 22e. A flame detector is provided in the burners 20 and 22 and coupled to the PCBA. The flame detector verifies if a flame has been ignited in the corresponding burner 20 or 22. If not, the respective gas valve(s) is/are closed, while the combustion air fan 26c is still operated for a predetermined time interval, in order to dispose of the gas previously injected into the respective combustion area 20e or 22e. Then, a new attempt for ignition is made by opening the gas valve and providing an electric arc or sparks at the respective combustion area 20e or 22e. After the successful ignition of a flame, the respective ignition arrangement 20c or 22c is turned off.

In the following, some exemplary modifications are described that even improve the characteristics and/ or functionality of the herein disclosed heating apparatus 1.

According to a first modification, the heating apparatus can be provided with a secondary air supply arrangement. By this secondary air supply arrangement, a supply of secondary air from the external environment to at least one of the burners can be realized. In such a configuration the combustion air depicts the primary air. While the primary air is supplied to start a combustion reaction with the fuel gas or liquid, the secondary air is provided to complete the reaction. This results in an improved flame stability and emission characteristics. A burner with such a functionality is also called flat surface burner. A flat surface burner can be further provided with a wall having a plurality of apertures and being arranged to further separate the flow of primary air or combustion air from the flow of secondary air. In such a configuration, the dimension of the apertures is optimized as a function of the rate of secondary air, which in particular also depends on the fans.

Although, referring to the above embodiment a configuration with only two burners is described, also implementations having more than two burners can be provided if desired. Preferably, even if more than two burners are provided, all of the burners can be supplied with combustion air by the one single combustion air fan, to transfer the therewith obtained simple and reliable setting to such a configuration.

Although within the scope of the above embodiment a configuration with only two nozzles 22b1 and 22b2 in the second burner 22 is described the second burner 22 (and also the first burner 20) can be provided with more than two nozzles to implement more than four distinct operation states.

Although within the scope of the above embodiment a configuration in which both nozzles 22b1 and 22b2 of the second burner 22 have different structures (cross sections of their supply openings) are described the nozzles 22b1 and 22b2 can have the same structure. Effectively, only three various operation states are, thus, realized.

A preferred embodiment of a monostable valve, as used herein, includes a valve body having an inlet for connection to a fuel supply and an outlet for connection to the respective nozzle. A valve seat is positioned between the inlet and the outlet of the gas body. A valve member is linearly movable between a closed position or state and an open position or state. In the closed position or state the valve member is seated on the valve seat, and in the open position or state valve member is spaced from the valve seat. Usually, a spring acting on the valve member keeps the valve member in the closed position. A solenoid (electro-magnet) is fixed to the valve body and, when energized, acts on the valve member to move it to or keep it in the open position, i.e. when a gas injection is required. Conversely, the spring, when the solenoid is not energized, moves the valve member to or keeps the valve member in the closed position, i.e. when a gas injection is not required. Thus, the closure device moves linearly with respect to the electro-magnet, which is axially fixed. The solenoid is driven directly by the PCBA. No movable elements are provided for actuating the gas valve. The solenoid may be excited with two different current values: a constant first value and a constant second value, lower than the first one. Thus, when the gas valve is actuated for opening, the solenoid is firstly excited with the first value until a predetermined time, for example 100 ms, has passed, then it is excited with the second value. The transition from the first value to the second value is actuated by the PCBA depending on the time only, i.e. independently on the position of the valve itself. However, since the valve could not open instantaneously, for example in less than 100 ms, it is likely that the valve reaches the open position when the coil is excited with the second (lower) value. Then the valve is hold in the opening position as long as the coil is kept excited with the second value.

Preferably, the liquid tank is further coupled to a frost valve. The frost valve comprises a pressure valve and is configured to perform at least the following basic functions: manual drain, frost draining (automatic) and pressure relief. However, also other configurations are possible.

Preferably, the heating apparatus 1 further comprises an external container. In the external container all of the elements of the heating apparatus 1 are arranged. The external container shields the various components of the heating apparatus against harmful external influences like, for example, sun radiation, water or dirt. Further preferably, the external container is made of molded plastic, as such a material is highly resistive to external influences and forces.

According to a further modification, the heating apparatus further includes a supplementary electric heater. The supplementary heater provides a heating coil to achieve a supplementary heating of the ventilation air. The electric heater can be positioned inside the external container, next to the second heat exchanger and is driven by the PCBA. Thus, it is possible to increase the heating power of the heating apparatus 1.

Preferably, the heating apparatus is provided with a master valve for cutting the supply with fuel gas or liquid centrally.

It should be noted that the above described configurations are preferred but merely exemplary embodiments of the present invention but do not limit the achieved scope of protection as defined by the appended set of claims. A skilled artisan will be able to imagine various modifications of the above described configurations without contravening the basic idea of the present invention and/ or leaving the scope of protection as defined by the appended set of claims.

### REFERENCE NUMERALS

- 1: heating apparatus
- 10: heating unit
- 12: primary housing
- 12a: opening
- 12c: ventilation slots
- 14: secondary housing
- 14a: first heat exchanging unit opening
- 14b: second heat exchanging unit opening
- 14b1: ventilation air outlet section
- 14c: ventilation slots
- 16: coupling member
- 16a: base portion
- 16a1: bearing surface
- 16a2: through holes
- 16b: preheating portion
- 16b1: combustion air flow duct
- 16b1A: inlet opening
- 16b1B: outlet opening
- 16b2: exhaust gasses flow duct
- 16b2A: first inlet opening
- 16b2B: second inlet opening
- 16b2C: outlet opening
- 16b3: separation wall
- 16c: printed circuit board assembly (PCBA) coupling portion
- 16c1: threaded bore
- 16d: first burner coupling portion
- 16e: second burner coupling portion
- 18: printed circuit board assembly (PCBA)
- 20: first burner
- 20a: combustion air flow duct
- 20a1: inlet opening
- 20b: nozzle
- 20c: ignition arrangement
- 20d: controlling arrangement
- 20e: combustion area
- 22: second burner
- 22a: combustion air flow duct
- 22a1: inlet opening
- 22b1: first nozzle
- 22b2: second nozzle
- 22c: ignition arrangement
- 22d: controlling arrangement
- 22e: combustion area
- 24: fuel gas or liquid piping
- 26: combustion air fan unit
- 26a: first housing element
- 26a1: combustion air inlet opening
- 26a2: first combustion air outlet opening
- 26a3: second combustion air outlet opening
- 26b: second housing element
- 26b1: driving rod through hole
- 26c: combustion air fan
- 26d: combustion air fan driving unit
- 26e: combustion air fan chamber
- 28: ventilation air driving unit
- 28a: inlet opening
- 28b: outlet opening
- 30: first heat exchanging unit
- 32: liquid tank
- 32a: main body
- 32a1: bottom plate
- 32b: lid member
- 32b1: exhaust gasses inlet opening
- 32b2: exhaust gasses outlet opening
- 32b3: cold liquid inlet opening
- 32b4: hot liquid outlet opening
- 32b5: first equipment insertion opening
- 32b6: second equipment insertion opening
- 34: exhaust gasses piping
- 34a: combustion chamber section
- 34b: exhaust gasses leading section
- 36: cold liquid piping
- 38: hot liquid piping
- 39: heating members
- 40: second heat exchanging unit
- 42: ventilation air enclosure
- 42a: body portion
- 42a1: end plate
- 42a1A: ventilation air inlet opening
- 42a1B: exhaust gasses inlet opening
- 42a1C: exhaust gasses outlet opening
- 42b: lid section
- 42b1: first ventilation air outlet opening
- 42b2: second ventilation air outlet opening
- 42b3: third ventilation air outlet opening
- 42b4: fourth ventilation air outlet opening
- 44: exhaust gasses piping
- 44a: combustion chamber section
- 44b: exhaust gasses leading section
- 50: heat exchanging units housing shell
- 50a: first heat exchanging unit section
- 50b: second heat exchanging unit section
- 52: supplementary mounting member
- 52a: first heat exchanging unit section
- 52b: second heat exchanging unit section
- 52c: mounting section

## Claims

1. A heating apparatus (1), in particular for recreational vehicles like campers or caravans, comprising:
a heating unit (10) and two separate heat exchanging units (30, 40), the heat exchanging units (30, 40) are coupled to the heating unit (10) in parallel with each other;
wherein the heating unit (10) comprises one burner (20, 22) for each heat exchanging unit (30, 40) and one common single combustion air fan unit (26),
wherein the single combustion air fan unit (26) is configured to supply the burners (20, 22) with combustion air, and
wherein the burners (20,22) are configured to burn fuel gas or liquid supplied to each of the burners (20, 22) together with the combustion air received from the single combustion air fan unit (26) to achieve hot exhaust gasses, wherein the heat exchanging units (30, 40) are configured to receive the exhaust gasses from the burners (20, 22) and to transfer heat from the exhaust gasses to fluids to be heated, provided within the heat exchanging units (30, 40), wherein the single combustion air fan unit (26) has only one single combustion air fan (26c) for generating the flow of combustion air, and wherein the single combustion air fan (26c) in particular comprises only one single fan wheel, preferably in the form of an impeller,
**characterized in that**
the single combustion air fan unit (26) further comprises two housing elements (26a, 26b),
wherein the housing elements (26a, 26b) are coupled to each other to form a combustion air flow path from one combustion air inlet opening (26a1) provided in one of the two housing elements (26a, 26b), via one single combustion air fan chamber (26e) enclosed by the two housing elements (26a, 26b) and containing the single combustion air fan (26c), to two combustion air outlet openings (26a2, 26a3) provided in the housing elements (26a, 26b), and
wherein each of the combustion air outlet openings (26a2, 26a3) is coupled to one of the burners (20, 22).

2. The heating apparatus (1) according to claim 1, wherein
the first heat exchanging unit (30) is configured to transfer heat from the exhaust gasses to a liquid to be heated, in particular water for sanitary or cooking purposes, and/or the second heat exchanging unit (40) is configured to transfer heat from the exhaust gasses to a gas to be heated, in particular ventilation air from the interior of the recreational vehicle.

3. The heating apparatus (1) according to claim 1 or 2, wherein
the heating unit (1) further comprises a printed circuit board assembly (18), wherein the printed circuit board assembly (18) is coupled to the burners (20, 22) and is configured to operate the burners (20, 22) independently of each other to heat the fluids provided in the heat exchanging units (30, 40) independently of each other.

4. The heating apparatus (1) according to one of the preceding claims 1 to 3, wherein
the burners (20, 22) are coupled to the single combustion air fan unit (26) in parallel with each other such that a flow of combustion air generated by the single combustion air fan unit (26) is split between the burners (20, 22).

5. The heating apparatus (1) according to one of the preceding claims, wherein
the single combustion air fan unit (26) further comprises a combustion air fan driving unit (26d) coupled to the single combustion air fan (26c) and configured to drive the combustion air fan (26c), and
wherein the combustion air fan driving unit (26d) is provided on an outer surface of one of the housing elements (26a, 26b) and is coupled to the combustion air fan (26c) via a driving rod lead through a driving rod through hole (26b1) provided in the housing element (26b) on which the combustion air fan driving unit (26d) is provided.

6. The heating apparatus (1) according to one of the preceding claims, wherein
the single combustion air fan unit (26) further comprises two combustion air valves, and wherein each of the combustion air valves is configured to close a section of the combustion air flow path from the single combustion air fan chamber (26e) to one of the combustion air outlet openings (26a2, 26a3).

7. The heating apparatus (1) according to one of the preceding claims, wherein
at least one of the burners (20, 22) comprises two nozzles (22b1, 22b2) configured to supply fuel gas and liquid respectively to a combustion area (20e, 22e) in which the fuel gas or liquid is to be burned with the combustion air, and
wherein each of the nozzles (22b1, 22b2) is coupled to its own fuel gas and liquid valve respectively, the fuel gas and liquid valves being preferably monostopable valves switchable between an opened operation state and a closed operation state, to control the fuel gas and liquid supply respectively for each of the nozzles (22b1, 22b2) independently of each other.

8. The heating apparatus (1) according to one of the preceding claims, wherein
the heating unit (10) further comprises a secondary air supply arrangement configured to provide a flow of secondary air to at least one, in particular both, of the burners (20, 22).

9. Recreational vehicle, in particular a camper or caravan, comprising at least one heating apparatus (1) according to one of the preceding claims.

10. Method for heating two distinct fluids with a heating apparatus (1) according to one of the preceding claims 1 to 9 comprising the steps of:
operating the single combustion air fan unit (26) to generate a flow of combustion air from an external environment of the heating apparatus (1) to each of the burners (20, 22);
supplying fuel gas or liquid to each of the burners (20,22);
operating the burners (20, 22) to burn a mixture of the combustion air with the fuel gas or liquid; supplying a first fluid to be heated to the first heat exchanging unit (30) and supplying a second fluid to be heated, different from the first fluid, to the second heat exchanging unit (40);
guiding the exhaust gasses of the combustion within the first burner (20) from the first burner (20) to and through the first heat exchanging unit (30) to transfer heat from the exhaust gasses to the first fluid; and
guiding the exhaust gasses of the combustion within the second burner (22) form the second burner (22) to and through the second heat exchanging unit (40) to transfer heat from the exhaust gasses to the second fluid,
wherein after being guided through the heat exchanging units (30, 40) the exhaust gasses are used to preheat the combustion air.

11. Method according to claim 10,
wherein the combustion air fan unit (26) is operated in such a manner that it provides the flow of combustion air to the burners (20, 22) simultaneously and in parallel with each other.

12. Method according to any one of the preceding claims 10 and 11,
wherein the burners (20, 22) are operated simultaneously such that the fluids are heated simultaneously.

## Patentansprüche

1. Eine Heizvorrichtung (1), insbesondere für Freizeitfahrzeuge wie Wohnmobile oder Wohnwagen, umfassend:
eine Heizeinheit (10) und zwei separate Wärmetauscheinheiten (30, 40), wobei die Wärmetauscheinheiten (30, 40) parallel zueinander an die Heizeinheit (10) gekoppelt sind;
wobei die Heizeinheit (10) einen Brenner (20, 22) für jede Wärmetauscheinheit (30, 40) und eine gemeinsame einzige Verbrennungsluft-Lüftereinheit (26) umfasst,
wobei die einzige Verbrennungsluft-Lüftereinheit (26) so konfiguriert ist, dass sie die Brenner (20, 22) mit Verbrennungsluft versorgt, und
wobei die Brenner (20, 22) so konfiguriert sind, dass sie Brenngas oder -flüssigkeit, welche(s) jedem der Brenner (20, 22) zugeführt wird, zusammen mit der Verbrennungsluft, die von der einzigen Verbrennungsluft-Lüftereinheit (26) empfangen wird, verbrennen, um heiße Abgase zu erhalten,
wobei die Wärmetauscheinheiten (30, 40) so konfiguriert sind, dass sie die Abgase von den Brennern (20, 22) empfangen und Wärme von den Abgasen auf zu heizende Fluide, die in den Wärmetauscheinheiten (30, 40) bereitgestellt werden, übertragen,
wobei die einzige Verbrennungsluft-Lüftereinheit (26) nur einen einzigen Verbrennungsluft-Lüfter (26c) zur Erzeugung des Verbrennungsluft-Stroms aufweist, und
wobei der einzige Verbrennungsluft-Lüfter (26c) insbesondere nur ein einziges Lüfterrad,
vorzugsweise in Gestalt eines Impellers, aufweist.
**dadurch gekennzeichnet, dass**
die einzige Verbrennungsluft-Lüftereinheit (26) ferner zwei Gehäuseelemente (26a, 26b) umfasst, wobei die Gehäuseelemente (26a, 26b) miteinander gekoppelt sind, um einen Verbrennungsluft-Strömungsweg von einer Verbrennungsluft-Einlassöffnung (26a1), die in einem der beiden Gehäuseelemente (26a, 26b) vorgesehen ist, über eine einzige Verbrennungsluft-Lüfterkammer (26e), die von den beiden Gehäuseelementen (26a, 26b) umschlossen ist und den einzigen Verbrennungsluft-Lüfter (26c) enthält, zu zwei Verbrennungsluft-Auslassöffnungen (26a2, 26a3), die in den Gehäuseelementen (26a, 26b) vorgesehen sind, zu bilden, und
wobei jede der Verbrennungsluft-Auslassöffnungen (26a2, 26a3) mit einem der Brenner (20, 22) gekoppelt ist.

2. Die Heizvorrichtung (1) nach Anspruch 1, wobei
die erste Wärmetauscheinheit (30) konfiguriert ist, um Wärme von den Abgasen an eine zu heizende Flüssigkeit, insbesondere Wasser für Sanitär- oder Kochzwecke, zu übertragen, und/oder die zweite Wärmetauscheinheit (40) konfiguriert ist, um Wärme von den Abgasen an ein zu heizendes Gas, insbesondere Belüftungsluft aus dem Innenraum des Freizeitfahrzeugs, zu übertragen.

3. Die Heizvorrichtung (1) nach Anspruch 1 oder 2, wobei
die Heizeinheit (1) ferner eine Leiterplattenbaugruppe (18) umfasst, wobei die Leiterplattenbaugruppe (18) mit den Brennern (20, 22) gekoppelt und so konfiguriert ist, dass sie die Brenner (20, 22) unabhängig voneinander betreibt, um die in den Wärmetauscheinheiten (30, 40) bereitgestellten Fluide unabhängig voneinander zu heizen.

4. Die Heizvorrichtung (1) nach einem der vorstehenden Ansprüche 1 bis 3, wobei
die Brenner (20, 22) parallel zueinander mit der einzigen Verbrennungsluft-Lüftereinheit (26) gekoppelt sind, so dass ein von der einzigen Verbrennungsluft-Lüftereinheit (26) erzeugter Verbrennungsluft-Strom zwischen den Brennern (20, 22) aufgeteilt wird.

5. Die Heizvorrichtung (1) nach einem der vorstehenden Ansprüche, wobei
die einzige Verbrennungsluft-Lüftereinheit (26) ferner eine Verbrennungsluft-Lüfterantriebseinheit (26d) umfasst, die mit dem einzigen Verbrennungsluft-Lüfter (26c) gekoppelt und so konfiguriert ist, dass sie das Verbrennungsluft-Lüfter (26c) antreibt, und
wobei die Verbrennungsluft-Lüfterantriebseinheit (26d) an einer Außenfläche eines der Gehäuseelemente (26a, 26b) vorgesehen ist und mit dem Verbrennungsluft-Lüfter (26c) über eine Antriebsstange gekoppelt ist, die durch ein Antriebsstangen-Durchgangsloch (26b1) geführt ist, das in demjenigen Gehäuseelement (26b) vorgesehen ist, an dem die Verbrennungsluft-Lüfterantriebseinheit (26d) vorgesehen ist.

6. Die Heizvorrichtung (1) nach einem der vorstehenden Ansprüche, wobei
die einzige Verbrennungsluft-Lüftereinheit (26) ferner zwei Verbrennungsluft-Ventile umfasst, und wobei jedes der Verbrennungsluft-Ventile so konfiguriert ist, dass es einen Abschnitt des Verbrennungsluft-Strömungsweges von der einzigen Verbrennungsluft-Lüfterkammer (26e) zu einer der Verbrennungsluft-Auslassöffnungen (26a2, 26a3) verschließt.

7. Die Heizvorrichtung (1) nach einem der vorstehenden Ansprüche, wobei
mindestens einer der Brenner (20, 22) zwei Düsen (22b1, 22b2) umfasst, die so konfiguriert sind, dass sie Brenngas oder -flüssigkeit einem Verbrennungsbereich (20e, 22e) zuführen, in dem das Brenngas oder die Brennflüssigkeit mit der Verbrennungsluft verbrannt werden soll, und
wobei jede der Düsen (22b1, 22b2) mit ihrem eigenen Brenngas- oder Brennflüssigkeits-Ventil, vorzugsweise monostabile Ventile, die zwischen einem geöffneten Betriebszustand und einem geschlossenen Betriebszustand umschaltbar sind, gekoppelt ist, um die Brenngas- oder Brennflüssigkeitszufuhr für jede der Düsen (22b1, 22b2) unabhängig voneinander zu steuern.

8. Die Heizvorrichtung (1) gemäß einem der vorstehenden Ansprüche, wobei
die Heizeinheit (10) ferner eine Sekundärluft-Zuführungsanordnung umfasst, die so konfiguriert ist, dass sie einen Sekundärluft-Strom zu mindestens einem, insbesondere beiden, Brenner(n) (20, 22) liefert.

9. Freizeitfahrzeug, insbesondere ein Wohnmobil oder Wohnwagen, mit mindestens einer Heizvorrichtung (1) gemäß einem der vorstehenden Ansprüche.

10. Verfahren zum Heizen von zwei verschiedenen Fluiden mit einer Heizvorrichtung (1) nach einem der vorstehenden Ansprüche 1 bis 9, umfassend die folgenden Schritte:
Betreiben der einzigen Verbrennungsluft-Lüftereinheit (26), um einen Verbrennungsluft-Strom aus einer äußeren Umgebung der Heizvorrichtung (1) zu jedem der Brenner (20, 22) zu erzeugen;
Zuführen von Brenngas oder -flüssigkeit zu jedem der Brenner (20, 22);
Betreiben der Brenner (20, 22), um ein Gemisch der Verbrennungsluft mit dem Brenngas oder der Brennflüssigkeit zu verbrennen;
Zuführen eines ersten zu heizenden Fluids zu der ersten Wärmetauscheinheit (30) und Zuführen eines zweiten zu heizenden Fluids, das sich von dem ersten Fluid unterscheidet, zu der zweiten Wärmetauscheinheit (40);
Leiten der Abgase der Verbrennung innerhalb des ersten Brenners (20) von dem ersten Brenner (20) zu und durch die erste Wärmetauscheinheit (30), um Wärme von den Abgasen auf das erste Fluid zu übertragen; und
Leiten der Abgase der Verbrennung innerhalb des zweiten Brenners (22) von dem zweiten Brenner (22) zu und durch die zweite Wärmetauscheinheit (40), um Wärme von den Abgasen auf das zweite Fluid zu übertragen,
wobei die Abgase, nachdem sie durch die Wärmetauscheinheiten (30, 40) geleitet wurden, zur Vorerwärmung der Verbrennungsluft verwendet werden..

11. Verfahren nach Anspruch 10,
wobei die Verbrennungsluft-Lüftereinheit (26) so betrieben wird, dass sie den Verbrennungsluft-Strom den Brennern (20, 22) gleichzeitig und parallel zueinander zuführt.

12. Verfahren nach einem der vorstehenden Ansprüche 10 und 11,
wobei die Brenner (20, 22) gleichzeitig betrieben werden, so dass die Fluide gleichzeitig geheizt werden.

## Revendications

1. Appareil de chauffage (1), en particulier pour des véhicules de loisir comme des camping-cars ou des caravanes, comprenant :
une unité de chauffage (10) et deux unités d'échange de chaleur séparées (30, 40), les unités d'échange de chaleur (30, 40) étant connectées à ladite unité de chauffage (10) en parallèle l'une à l'autre ;
ladite unité de chauffage (10) comprenant un brûleur (20, 22) pour chaque unité d'échange de chaleur (30, 40) et une seule unité commune de ventilation d'air de combustion (26),
ladite seule unité de ventilation d'air de combustion (26) étant configurée pour alimenter les brûleurs (20, 22) en air de combustion, et
les brûleurs (20, 22) étant configurés pour brûler du gaz ou liquide combustible dont est alimenté chacun des brûleurs (20, 22) ensemble avec l'air de combustion reçu de ladite seule unité de ventilation d'air de combustion (26) afin d'obtenir des gaz d'échappement chauds, les unités d'échange de chaleur (30, 40) étant configurées pour recevoir les gaz d'échappement des brûleurs (20, 22) et de transférer de la chaleur depuis les gaz d'échappement vers des fluides à chauffer fournis à l'intérieur des unités d'échange de chaleur (30, 40), ladite seule unité de ventilation d'air de combustion (26) ne comprenant qu'un seul ventilateur d'air de combustion (26c) pour générer le courant d'air de combustion, et ledit seul ventilateur d'air de combustion (26c) ne comprenant en particulier qu'une seule roue de ventilation, de préférence dans la forme d'une roue à ailettes,
**caractérisé en ce que**
ladite seule unité de ventilation d'air de combustion (26) comprend en outre deux éléments de boîtier (26a, 26b), lesdits éléments de boîtier (26a, 26b) étant connectés l'un à l'autre pour former une voie d'écoulement d'air de combustion depuis une ouverture d'entrée d'air de combustion (26a1) prévue dans un des deux éléments de boîtier (26a, 26b), via une seule chambre de ventilation d'air de combustion (26e) qui est enfermée par les deux éléments de boîtier (26a, 26b) et qui contient le seul ventilateur d'air de combustion (26c), vers deux ouvertures de sortie d'air de combustion (26a2, 26a3) prévues dans les éléments de boîtier (26a, 26b), et
chacune des ouvertures de sortie d'air de combustion (26a2, 26a3) étant connectée à un des brûleurs (20, 22).

2. Appareil de chauffage (1) selon la revendication 1, dans lequel
la première unité d'échange de chaleur (30) est configurée pour transférer de la chaleur depuis les gaz d'échappement vers un liquide à chauffer, en particulier de l'eau à des fins sanitaires ou pour la cuisine, et/ou la deuxième unité d'échange de chaleur (40) est configurée pour transférer de la chaleur depuis les gaz d'échappement vers un gaz à chauffer, en particulier de l'air de ventilation de l'intérieur du véhicule de loisir.

3. Appareil de chauffage (1) selon la revendication 1 ou 2, dans lequel
ledit appareil de chauffage (1) comprend en outre un ensemble de circuit imprimé (18), ledit ensemble de circuit imprimé (18) étant connecté aux brûleurs (20, 22) et étant configuré pour faire opérer les brûleurs (20, 22) indépendamment l'un de l'autre pour chauffer les fluides fournis dans les unités d'échange de chaleur (30, 40) indépendamment l'un de l'autre.

4. Appareil de chauffage (1) selon l'une quelconque des revendications précédentes 1 à 3, dans lequel
les brûleurs (20, 22) sont connectés à ladite seule unité de ventilation d'air de combustion (26) en parallèle l'un à l'autre de façon qu'un courant d'air de combustion généré par ladite seule unité de ventilation d'air de combustion (26) est reparti entre les brûleurs (20, 22).

5. Appareil de chauffage (1) selon l'une quelconque des revendications précédentes, dans lequel
ladite seule unité de ventilation d'air de combustion (26) comprend en outre une unité d'entraînement de ventilateur d'air de combustion (26d) qui est connectée audit seul ventilateur d'air de combustion (26c) et qui est configurée pour entraîner le ventilateur d'air de combustion (26c), et
ladite unité d'entraînement de ventilateur d'air de combustion (26d) étant prévue sur une surface extérieure d'un des éléments de boîtier (26a, 26b) et étant connectée audit ventilateur d'air de combustion (26c) via une tige d'entraînement qui passe par un trou traversant à tige d'entraînement (26b1) prévu dans l'élément de boîtier (26b) où ladite unité d'entraînement de ventilateur d'air de combustion (26d) est prévue.

6. Appareil de chauffage (1) selon l'une quelconque des revendications précédentes, dans lequel
ladite seule unité de ventilation d'air de combustion (26) comprend en outre deux valves d'air de combustion, et chacune des valves d'air de combustion est configurée pour fermer un segment de la voie d'écoulement d'air de combustion depuis la chambre de ventilation d'air de combustion (26e) vers une des ouvertures de sortie d'air de combustion (26a2, 26a3).

7. Appareil de chauffage (1) selon l'une quelconque des revendications précédentes, dans lequel
au moins un des brûleurs (20, 22) comprend deux buses (22b1, 22b2) configurées pour alimenter en gaz ou liquide combustible, respectivement, une zone de combustion (20e, 22e) dans laquelle le gaz ou liquide combustible est destiné à être brûlé avec l'air de combustion ; et
chacune des buses (22b1, 22b2) est connectée à sa propre valve à gaz ou liquide combustible, respectivement, lesdites valves à gaz ou liquide combustible étant de préférence des valves monostables qui sont commutables entre un état d'opération ouvert et un état fermé, pour commander l'alimentation en gaz ou liquide combustible, respectivement, pour chacune des buses (22b1, 22b2) indépendamment l'une de l'autre.

8. Appareil de chauffage (1) selon l'une quelconque des revendications précédentes, dans lequel
ladite unité de chauffage (10) comprend en outre un dispositif d'alimentation en air secondaire configuré pour fournir un courant d'air secondaire à au moins un, de préférence les deux, des brûleurs (20, 22).

9. Véhicules de loisir, en particulier un camping-car ou une caravane, comprenant au moins un appareil de chauffage (1) selon l'une quelconque des revendications précédentes.

10. Procédé de chauffage de deux fluides distincts avec un appareil de chauffage (1) selon l'une quelconque des revendications précédentes 1 à 9, comprenant les étapes suivantes :
faire opérer ladite seule unité de ventilation d'air de combustion (26) pour générer un courant d'air de combustion depuis l'environnement externe de l'appareil de chauffage (1) vers chacun des brûleurs (20, 22) ;
fournir du gaz ou liquide combustible à chacun des brûleurs (20, 22) ;
faire opérer les brûleurs (20, 22) pour brûler un mélange d'air de combustion avec du gaz ou du liquide combustible ;
fournir un premier fluide à chauffer à la première unité d'échange de chaleur (30) et fournir un deuxième fluide à chauffer, qui est différent du premier fluide, à la deuxième unité d'échange de chaleur (40) ;
mener les gaz d'échappement de la combustion à l'intérieur du premier brûleur (20) depuis le premier brûleur (20) vers et à travers ladite première unité d'échange de chaleur (30) pour transférer de la chaleur depuis les gaz d'échappement vers le premier fluide ; et
mener les gaz d'échappement de la combustion à l'intérieur du deuxième brûleur (22) depuis le deuxième brûleur (22) vers et à travers ladite deuxième unité d'échange de chaleur (40) pour transférer de la chaleur depuis les gaz d'échappement vers le deuxième fluide,
après ayant été menés à travers les unités d'échange de chaleur (30, 40), les gaz d'échappement étant utilisés pour préchauffer l'air de combustion.

11. Procédé selon la revendication 10, dans lequel
ladite unité de ventilation d'air de combustion (26) est faite opérer de façon qu'elle fournit le courant d'air de combustion aux brûleurs (20, 22) simultanément et en parallèle l'un à l'autre.

12. Procédé selon l'une quelconque des revendications précédentes 10 et 11, dans lequel
les brûleurs (20, 22) sont faits opérer simultanément de façon que les fluides sont chauffés simultanément.
